# EUROPEAN PATENT SPECIFICATION

(11) **EP 3 932 511 B1**
(45) Date of publication and mention of the grant of the patent: **14.10.2026**
(21) Application number: 21175580.6
(22) Date of filing: 25.05.2021
(51) Int. Cl.: B01D 3/14, B01D 3/32, B01D 3/42, C10M 175/00, B01D 3/10

(54) **PLANT FOR THE REGENERATION OF WASTE OILS**
ANLAGE FÜR REGENERIERUNG VON ABFALLÖL
INSTALLATION POUR RÉGÉNERATION DES HUILES

(30) Priority: 03.07.2020 IT 202000016126
(43) Date of publication of application: 05.01.2022
(73) Proprietor: Itelyum Regeneration S.p.A., 26854 Pieve Fissiraga (LO) (IT)
(72) Inventor: GALLO, Francesco, 26854 PIEVE FISSIRAGA LO (IT); PELIS, Oscar, 26854 PIEVE FISSIRAGA LO (IT); QUAGLIA, Alessandro, 26854 PIEVE FISSIRAGA LO (IT); ROLDI, Aldo, 26854 PIEVE FISSIRAGA LO (IT)
(74) Representative: Vatti, Francesco Paolo

(56) References cited:
- EP-A1- 3 392 328
- EP-A2- 0 805 323
- WO-A1-2018/052217
- CA-A- 1 093 455
- US-A- 4 502 921
- US-A- 5 469 710
- US-A- 5 590 543
- US-A1- 2012 031 747

## Description

The present invention refers to a plant for the regeneration of waste oils.

Distillation is a process which has been widely known for a very long time also to many lay users, since it seems that it was used in Mesopotamia, already between the VII and the VI century before Christ. It is known that Egyptians used it to obtain flavours and fragrances around 4000 before Christ, while the production of drinks has historical roots dating back to the end of the Middle Ages, at the schools of Salerno, Montpellier and Toledo, where the production of brandy was started, initially for purely digestive purposes.

Distillation, in more scientific terms, is a separation process of two or more substances in a mixture in the liquid state. It consists in supplying heat to the mixture, causing the temperature thereof to rise, up to the boiling point of the liquid which has the lowest boiling point. At that point, the temperature stops rising and remains stationary, boiling begins and the substance with the lowest boiling point evaporates, leaving the mixture. Vapours are removed from the space where they form, channelled and cooled, obtaining the condensation of the liquid, now of high purity.

Once the substance with the lowest boiling point has been completely removed, the temperature of the mixture starts to rise again, until it reaches the boiling point of the second substance with the lowest boiling point, the boiling of said substance begins, the temperature stops again, the vapours of said second substance are collected and condensed and so on, until all the components are removed from the mixture which it was desired to remove.

A typical distillation example is precisely the one for hydro-alcoholic solutions. If wine or beer are poured into a retort, the temperature is first brought to 64.7°C. Methanol boiling is thus achieved. The vapours are cooled and the obtained methanol is discarded. Then, once all the methanol has been removed, the temperature starts rising again and reaches 78.1°C, when boiling of the mixture ethanol 95% - water 5% takes place, which is removed from the original mixture. Ethanol vapours are condensed and the condensate is collected for use. When there is no more ethanol in the mixture, the temperature starts rising again up until 100°C, when water evaporation takes place.

The example just given is a simple distillation example, but it introduces one of the problems of this practice: it is not possible to obtain ethanol devoid of water by simple distillation, since the mixture ethanol-water 95:5 has a lower boiling point than both its components and is defined "azeotropic mixture". The separation of azeotropic mixtures is one of the problems which can arise in distillation practice and has required to put in place more complex solutions, which allowed to overcome the obstacle.

Although it started from the preparation of spirits and pure alcohol, distillation is widely used also in other sectors, such as in the petrochemical industry, and the oil fractioned distillation process is known, which gives origin to the fractions of fuels and to the raw materials for the organic chemical industry.

Among the products of the petrochemical industry there are also lubricants, such as oils for engines or for machine tools. They too are normally produced starting from oil and distilling it, then the fractions of interest are further processed for imparting to the lubricants the physical and chemical-physical properties necessary for the desired performances.

As is known, lubricants deteriorate with use, since the movements between the parts in which they are involved are nevertheless linked to considerable frictions, even in the presence of lubrication, with heat build up and resulting dehydration, dehydrogenation, cleavage, cracking, condensation, recombination reactions and the like. This situation causes the chemical composition of the lubricants to change over time, also to a remarkable degree. Moreover, solid, metal or polymer particles can collect in the lubricant by detachment due to machine wall scratching. All this causes the deterioration of performances over time and, in the long run, use of the lubricant, by now changed, can even prove damaging for the machines in which it is employed.

It is then necessary, in order to restore good lubrication, to temporarily stop the machines and replace the waste lubricant with fresh lubricant. Waste lubricant is harmful to the environment, consisting of toxic substances and low-degradation substances. For this reason, already for a long time, it has been compulsory to collect waste lubricants and to bring them to compulsory consortia, to avoid improper disposal and the pollution of soil and groundwater.

The disposal of these waste oils, also regularly collected by consortia, is a problem which has been faced over time in ways which are also very different from one another. Firstly, oil was variously burnt, to get rid of it. However, this solution has two drawbacks: it creates greenhouse gases (when it does not produce also toxic gases) and does not allow to enhance the waste. For this reason, solutions were devised which provide to recover the waste oil, eliminating all that reduces the quality thereof and obtaining bases for lubricants, to be then processed in order to obtain again lubricants with the desired performances, and bitumen, which can have different uses, depending on its quality.

Among the processes for the recovery and enhancement of waste oils, a good deal of them - some of which patented by the present Applicant - provide distillation steps, as flash distillation or in packed column, sometimes managed under a reduced pressure or even under vacuum. The problem linked to this packed columns is that, due to the impurities contained in the oil to the regenerated, it can clog, causing remarkable pressure drops and making distillation impossible, at a certain point, finally blocking the liquid in the processing pipes. This forces to stop the plant, clean the distillation packed column, possibly replace the filling and restart the plant; all that implies remarkable problems, reducing plant productivity, diminishing the energy efficiency thereof and damaging the components of the plant in which the process is carried out. Not only that, but, even before coming to a clogging which forces to stop the process, the accumulation of clogging substances starts to oppose the flow of process liquids, remarkably increasing energy consumption with the same yield.

US2012/031 747 discloses a separation method of high-boiling and low-boiling fractions by distillation.

US 5 590 543 discloses a fractioned distillation process of liquid air. An auxiliary column is provided for the absorption of impurities, after the outflow from the distillation column.

WO2018/052 217 relates to a selective distillation apparatus and a distillation method, the apparatus allowing a control unit to change the operation states of a reflux device, a reboiler, a supply line, a discharge line, and a connection line into an activated or deactivated state according to the types of materials used for distillation, such that two distillation columns can both be switched into a serial connection mode and a parallel connection mode, thereby enabling the selective operation of a high-efficiency operation and a high-capacity operation of the distillation apparatus.

The problem at the base of the invention is that of proposing a distillation column which overcomes the mentioned drawbacks and which allows to avoid the clogging and the idle time of the plant for the cleaning of the column and the possible replacement of the filling. This object is achieved through a plant as defined in claim 1. The dependent claims describe preferential features of the invention.

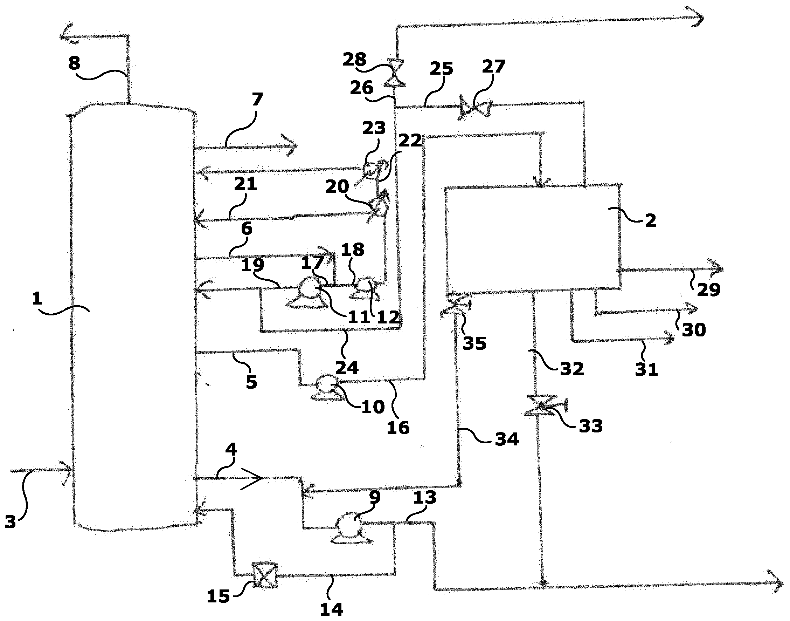

Further features and advantages of the invention are in any case more apparent from the following detailed description of a preferred embodiment, given purely as a non-limiting example and illustrated in the attached drawing, which represents the part of a plant comprising a distillation column, based on a preferred embodiment of the present invention.

The attached drawing represents a portion of a generic chemical or petrochemical plant. Based on such representation, the plant comprises a distillation column 1 and, according to the present invention, an emergency distillation column 2; based on a preferred embodiment, column 2 has a smaller volume than that of main distillation column 1, since the intervention thereof is expected to be temporary.
A mixture to be separated is supplied to column 1 in flow 3. Column 1 can be a column of any type: tray column, flash column, packed column. Preferably, it is a packed column or a tray column, the latter making it easier to measure and assess pressure drops.

Various flows 4, 5, 6, 7 come out from column 1 and, at the head of the column, a discharge of head product 8 comes out.

Flows 4-6 are managed by means of respective pumps or compressors 9-12.

Analysing the individual flows, the paths are as described in the following.

Flow 4 is supplied to a pump or compressor 9. outflow 13 from pump 9 undergoes a by-pass with a flow 14, which provides on its path a shut-off valve 15, which opens to flow 14 a recycling on the bottom of column 1. Flow 13 goes to the further process steps, relating to the product contained in the same flow 13.

Flow 5 is supplied to a pump or to a compressor 10. Flow 16 coming out of pump 10 is supplied to emergency column 2.

Flow 6 is split into two flows, 17 and 18, respectively. Flow 17 is supplied to a pump or compressor 11, which has an outflow 19, which goes back in as recycling into column 1. Flow 18 is supplied to a pump or compressor 12, which supplies it to a heat exchanger 20. From heat exchanger 20 two flows come out. The first flow 21 goes back into column 1 directly, at the temperature obtained due to the heat exchange with heat exchanger 20. The second flow 22 is supplied to a second heat exchanger 23 which brings it to a higher temperature and recycles it to column 1, in a higher position than flow 21. Going back to flow 19, coming out of pump 11, it is split and, in addition to flow 19, recycled, as seen, in column 1, a second flow 24 is obtained. Flow 24 is split into two flows 25 and 26, provided with a shut-off valve 27 and 28, respectively. Flow 26 is recovered as product, while flow 25 is supplied to column 2. Column 2 is preferably of the same type as column 1 (so as not to require a recalibration of the operating parameters) and implies outflows 29, 30 and 31. Another outflow 32 provides a shut-off valve 33 and joins flow 13. Finally, an outflow 34, controlled by a shut-off valve 35, sends a flow coming out from column 2 to join flow 4. From the above, it is easily inferred that said liquid stopping means are shut-off valves 28, 33 and 35.

During standard operation, the oil to be regenerated is supplied in 3 to column 1. The fractioned distillation leads to a series of fractions having different weight and hence with different boiling point, partly directed to the recovery as more or less noble product, partly recycled. Normally, column 1 is capable of distilling, in a known manner, the oil fractions in a standard manner.

According to the present invention, the pressure difference between inflow ad outflow of the liquid being distilled is measured continuously and compared against a dedicated threshold. Preferably, said threshold ranges between 2 and 100 torr (from 266.64 to 13, 332.2 Pa), more preferably between 5 and 50 torr (from 666.61 to 6,666.1 Pa), in the most preferred ways from 7 to 15 torr (from 933.25 to 1,999.83 Pa); thereby, the quality of the products is not worsened, due to the clogging of column 1. The measuring of said pressure difference can be done at different locations, for example at the inflow of column 1 and in correspondence of one of the outflows, or on one of the trays of column 1 or at any other reference location.

As long as the measured pressure difference is below said threshold, column 1 works independently to continue distillation and emergency column 2 remains inactive. When the pressure difference rises above the preset threshold, sign of a progressing clogging, emergency column 2 comes into action, so as to be able to maintain the plant in full operation. Valves 27, 33 and 35 open and column 2 is activated. Flow 16 and flow 25 enter column 2 and the separation by distillation thereof is started. From column 2 flows 29, 30 and 31 come out, which are sent directly to product recovery. Flow 32 joins instead flow 13, while flow 34 joins flow 4, to give flows 13 and 14. Advantageously, emergency column 2 operates at a pressure of 2,000-3,500 Pa.

Column 1 is thus deactivated and it can be provided to the regeneration thereof, in a way known per se, removing all the clogging material, while column 2 continues for this time the desired separation for the process.

Based on a preferred embodiment of the present invention, a liquid loop pump is associated with emergency column 2, apt to keep the vacuum at the head of column 2, without increasing excessively overall energy consumption.

Once regeneration has been carried out, column 1 is restarted and the measuring of the pressure difference will give a value below the threshold one. Thereby, valves 27, 33 and 35 are closed and column 2 stops working, leaving the task to column 1 only.

At this point, it can be suitable to clean column 2, so as to keep it ready for any new interventions, without the risk of finding it too clogged and to have to still stop the plant, impairing the extraordinary effects of the present invention.

Thereby, it is possible to avoid to forcedly stop the plant, thus reducing losses of energy and material, always operating in optimal flow and energy consumption conditions and maintaining unchanged product quality. Column 2, as can be seen, can be sized smaller, since the work is normally carried out for very short periods of time. A good arrangement of the connections between emergency column 2 and the rest of the plant allows to minimise the increase of consumption linked to the operation of column 2, using the ancillary produced energy in the various stages of the process or exploiting for its own functioning apparatuses already in use.

In another alternative embodiment, a thermal deasphaltation column is provided for the regeneration of waste oils, consisting of two separate fractionating segments, one consisting of a main distillation column 1 and the other consisting of an emergency column 2, as seen before. The column is preferably under vacuum. Based on this embodiment, the two segments operate in a complementary way and one supporting the other.

Based on this embodiment, the thermal deasphaltation column thus formed in two segments has a varying number of trays, depending on the quality of the waste oil to be regenerated.

However, it is understood that the invention must not be considered limited to the particular arrangement illustrated above, which makes up only an exemplifying embodiment thereof, but that different variants are possible, all within the reach of a person skilled in the field, without departing from the scope of protection of the invention, as defined by the following claims.

### LIST OF REFERENCE CHARACTERS

- 1: Primary distillation column
- 2: Emergency distillation column
- 3: Supply flow (of 1)
- 4: Outgoing flow (from 1)
- 5: Outgoing flow (from 1)
- 6: Outgoing flow (from 1)
- 7: Outgoing flow (from 1)
- 8: Flow produced at the head (from 1)
- 9: Pump or compressor
- 10: Pump or compressor
- 11: Pump or compressor
- 12: Pump or compressor
- 13: Outgoing flow (from 9)
- 14: Flow
- 15: Shut-off valve (of 14)
- 16: Outgoing flow (from 10)
- 17: Flow
- 18: Flow
- 19: Outgoing flow (from 11)
- 20: Heat exchanger
- 21: Recycling point (in 1)
- 22: Outgoing flow (from 20)
- 23: Heat exchanger
- 24: Flow
- 25: Flow
- 26: Flow
- 27: Shut-off valve (of 25)
- 28: Shut-off valve (of 26)
- 29: Outgoing flow (from 2)
- 30: Outgoing flow (from 2)
- 31: Outgoing flow (from 2)
- 32: Flow
- 33: Shut-off valve (of 32)
- 34: Outgoing flow (from 2)
- 35: Shut-off valve (of 34)

## Claims

1. Plant for the regeneration of waste oils, comprising a main distillation column (1), wherein a mixture to be separated is supplied to said column (1) in a flow (3) and various flows (4, 5, 6, 7) come out from said column (1), said flows (4-6) are managed by means of respective pumps or compressors (9-12), wherein a flow (4) is supplied to a pump or compressor (9), an outflow (13) from the said pump (9) is undergoing a by-pass with a flow (14), which provides on its path a shut-off valve (15), which opens to the said flow (14) a recycling on the bottom of the said main distillation column (1), a flow (13) goes to the further process steps, a flow (5) is supplied to a pump or to a compressor (10), and another flow (6) is split into two flows (17 and 18), one flow (17) being supplied to a pump or compressor (11), which has an outflow (19), which goes back in as recycling into the main column (1) and the other flow (18) being supplied to a pump or compressor (12), which supplies it to a heat exchanger (20), from which two flows come out, the first flow (21) going back into column (1) directly and the second flow (22) being supplied to a second heat exchanger (23) which brings it to a higher temperature and recycles it to the said column (1), said outflow (19) being recycled to the main column (1), coming out of pump (11), being split and a second flow (24) being obtained, which is split into two flows (25 and 26), provided with a shut-off valve (27 and 28), respectively, one flow (26) being recovered as product, the other flow (25) being supplied to an emergency column (2), implying outflows (29, 30 and 31), while another outflow (32) provides a shut-off valve (33) and joins flow (13) going to the further process steps, and an outflow (34), controlled by a shut-off valve 35, sending a flow coming out from emergency column (2) to join flow (4), whereby the plant further includes an emergency column (2) wherein a flow (16) coming out of pump (10)supplied by a flow coming from the main column (1) is supplied to emergency column (2) **characterised in that** the pressure difference between inflow and outflow of the liquid being distilled is measured continuously and compared against a dedicated threshold and when the pressure difference rises above the preset threshold, the emergency column (2) comes into action by opening shut-off valves (27, 33 and 35).

2. Plant as in claim 1), **characterised in that** the emergency column (2) has a smaller volume than that of the main distillation column (1).

3. Plant as in 1) or 2), **characterised in that** a liquid loop pump is associated with emergency column (2) for maintaining vacuum within said column.

4. Plant as in any preceding claim, which includes a thermal deasphaltation column for regenerating waste oils, **characterised in that** the said thermal deasphaltation column consists of two separate fractionating segments, one consisting of a main distillation column (1) and the other consisting of an emergency column (2), preferably under vacuum, and **in that** said two segments operate in a complementary way and one supporting the other.

## Patentansprüche

1. Anlage zur Regeneration von Altölen, umfassend eine Hauptdestillationskolonne (1), wobei ein zu trennendes Gemisch der besagten Kolonne (1) in einem Strom (3) zugeführt wird und verschiedene Ströme (4, 5, 6, 7) aus der besagten Kolonne (1) austreten, wobei die besagten Ströme (4-6) mittels jeweiliger Pumpen oder Verdichter (9-12) gesteuert werden, wobei ein Strom (4) einer Pumpe oder einem Verdichter (9) zugeführt wird, ein Auslassstrom (13) aus der besagten Pumpe (9) eine Umgehung mit einem Strom (14) erfährt, welcher auf seinem Weg ein Absperrventil (15) aufweist, welches für den besagten Strom (14) eine Rückführung auf den Boden der besagten Hauptdestillationskolonne (1) öffnet, ein Strom (13) zu den weiteren Verfahrensschritten verläuft, ein Strom (5) einer Pumpe oder einem Verdichter (10) zugeführt wird, und ein weiterer Strom (6) in zwei Ströme (17 und 18) aufgeteilt wird, wobei ein Strom (17) einer Pumpe oder einem Verdichter (11) zugeführt wird, welcher einen Auslassstrom (19) aufweist, welcher als Rückführung in die Hauptkolonne (1) zurückgeführt wird, und der andere Strom (18) einer Pumpe oder einem Verdichter (12) zugeführt wird, welcher ihn einem Wärmetauscher (20) zuführt, aus dem zwei Ströme austreten, wobei der erste Strom (21) direkt in die Kolonne (1) zurückgeführt wird und der zweite Strom (22) einem zweiten Wärmetauscher (23) zugeführt wird, der ihn auf eine höhere Temperatur bringt und ihn in die besagte Kolonne (1) zurückführt, wobei der besagte Auslassstrom (19), der in die Hauptkolonne (1) zurückgeführt wird und aus der Pumpe (11) austritt, aufgeteilt wird und ein zweiter Strom (24) erhalten wird, welcher in zwei Ströme (25 und 26) aufgeteilt wird, die jeweils mit einem Absperrventil (27 und 28) versehen sind, wobei ein Strom (26) als Produkt gewonnen wird, der andere Strom (25) einer Notfallkolonne (2) zugeführt wird, was Auslassströme (29, 30 und 31) mit sich bringt, während ein weiterer Auslassstrom (32) ein Absperrventil (33) aufweist und sich mit dem zu den weiteren Verfahrensschritten verlaufenden Strom (13) vereinigt, und ein Auslassstrom (34), der durch ein Absperrventil (35) gesteuert wird, einen aus der Notfallkolonne (2) austretenden Strom sendet, um sich mit dem Strom (4) zu vereinigen, wobei die Anlage weiter eine Notfallkolonne (2) unfässt, wodurch ein Strom (16), der aus der von einem aus der Hauptkolonne (1) stammenden Strom gespeisten Pumpe (10) austritt, der Notfallkolonne (2) zugeführt wird, **dadurch gekennzeichnet, dass** die Druckdifferenz zwischen Einlass und Auslass der destillierten Flüssigkeit kontinuierlich gemessen und mit einem vorgegebenen Schwellenwert verglichen wird und, wenn die Druckdifferenz über den vorgegebenen Schwellenwert ansteigt, die Notfallkolonne (2) durch Öffnen der Absperrventile (27, 33 und 35) in Aktion tritt.

2. Anlage nach Anspruch 1, **dadurch gekennzeichnet, dass** die Notfallkolonne (2) ein kleineres Volumen als dasjenige der Hauptdestillationskolonne (1) aufweist.

3. Anlage nach Anspruch 1 oder 2, **dadurch gekennzeichnet, dass** der Notfallkolonne (2) eine Flüssigkeitsringpumpe zugeordnet ist, um das Vakuum innerhalb der besagten Kolonne aufrechtzuerhalten.

4. Anlage nach einem der vorhergehenden Ansprüche, welche eine thermische Deasphaltierungskolonne zur Regeneration von Altölen umfasst, **dadurch gekennzeichnet, dass** die besagte thermische Deasphaltierungskolonne aus zwei getrennten Fraktioniersegmenten besteht, von denen eines aus einer Hauptdestillationskolonne (1) und das andere aus einer Notfallkolonne (2), vorzugsweise unter Vakuum, besteht, und dass die beiden Segmente in komplementärer Weise und einander unterstützend arbeiten.

## Revendications

1. Installation pour la régénération d'huiles usagées, comprenant une colonne de distillation principale (1), dans laquelle un mélange à séparer est amené à ladite colonne (1) dans un flux (3) et différents flux (4, 5, 6, 7) sortent de ladite colonne (1), lesdits flux (4-6) étant gérés au moyen de pompes ou de compresseurs (9-12) respectifs, dans laquelle un flux (4) est amené à une pompe ou un compresseur (9), un flux de sortie (13) de ladite pompe (9) subit une dérivation avec un flux (14), qui comporte sur son trajet une vanne d'arrêt (15), qui ouvre pour ledit flux (14) un recyclage sur le fond de ladite colonne de distillation principale (1), un flux (13) va vers les étapes de procédé ultérieures, un flux (5) est amené à une pompe ou à un compresseur (10), et un autre flux (6) est divisé en deux flux (17 et 18), un flux (17) étant amené à une pompe ou un compresseur (11), qui présente un flux de sortie (19), qui retourne sous forme de recyclage dans la colonne principale (1) et l'autre flux (18) étant amené à une pompe ou un compresseur (12), qui l'amène à un échangeur de chaleur (20), duquel sortent deux flux, le premier flux (21) retournant directement dans la colonne (1) et le deuxième flux (22) étant amené à un deuxième échangeur de chaleur (23) qui l'amène à une température plus élevée et le recycle vers ladite colonne (1), ledit flux de sortie (19) étant recyclé vers la colonne principale (1), sortant de la pompe (11), étant divisé et un deuxième flux (24) étant obtenu, qui est divisé en deux flux (25 et 26), munis respectivement d'une vanne d'arrêt (27 et 28), un flux (26) étant récupéré en tant que produit, l'autre flux (25) étant amené à une colonne de secours (2), impliquant des flux de sortie (29, 30 et 31), tandis qu'un autre flux de sortie (32) comporte une vanne d'arrêt (33) et rejoint le flux (13) allant vers les étapes de procédé ultérieures, et un flux de sortie (34), commandé par une vanne d'arrêt (35), envoyant un flux sortant de la colonne de secours (2) pour rejoindre le flux (4), l'installation comprenant en outre une colonne de secours (2), de sorte qu'un flux (16) sortant de la pompe (10) alimentée par un flux provenant de la colonne principale (1) est amené à la colonne de secours (2), **caractérisée en ce que** la différence de pression entre l'entrée et la sortie du liquide en cours de distillation est mesurée en continu et comparée à un seuil dédié et, lorsque la différence de pression s'élève au-dessus du seuil prédéfini, la colonne de secours (2) entre en action par l'ouverture des vannes d'arrêt (27, 33 et 35).

2. Installation selon la revendication 1, **caractérisée en ce que** la colonne de secours (2) a un volume inférieur à celui de la colonne de distillation principale (1).

3. Installation selon la revendication 1 ou 2, **caractérisée en ce qu'**une pompe à anneau liquide est associée à la colonne de secours (2) pour maintenir le vide à l'intérieur de ladite colonne.

4. Installation selon l'une quelconque des revendications précédentes, qui comprend une colonne de désasphaltage thermique pour régénérer des huiles usagées, **caractérisée en ce que** ladite colonne de désasphaltage thermique est constituée de deux segments de fractionnement distincts, l'un étant constitué d'une colonne de distillation principale (1) et l'autre étant constitué d'une colonne de secours (2), de préférence sous vide, et **en ce que** lesdits deux segments fonctionnent de manière complémentaire et l'un soutenant l'autre.
